# EUROPEAN PATENT SPECIFICATION

(11) **EP 0 645 283 B1**
(45) Date of publication and mention of the grant of the patent: **19.11.1997**
(21) Application number: 94306758.7
(22) Date of filing: 15.09.1994
(51) Int. Cl.: B60R 9/045

(54) **Vehicle article carrier**
Lastträger für Kraftfahrzeuge
Porte-bagages pour véhicules

(30) Priority: 15.09.1993 US 121313
(43) Date of publication of application: 29.03.1995
(73) Proprietor: JAC PRODUCTS, INC., Ann Arbor, MI 48108 (US)
(72) Inventor: Cucheran, John Stephen, Lake Orion, Michigan 48035 (US); Bott, John Anthony, Grosse Pointe Farms, Michigan 48236 (US)
(74) Representative: Price, Nigel John King

(56) References cited:
- US-A- 4 406 386
- US-A- 4 684 048
- US-A- 4 972 983
- US-A- 5 190 198
- US-A- 5 203 483

## Description

The present invention relates generally to vehicle article or luggage carriers and more particularly to a new and improved vehicle luggage carrier of the type shown in US-A-4,684,048.

US-A-4,684,048 discloses an article carrier having the construction described in conjunction with Figures 1-13 of the drawings of the present application. The article carrier disclosed in US-A-4,684,048 is adapted to be secured to a motor vehicle adjacent to a generally horizontally extending vehicle body surface and comprises:
a pair of elongate support members adapted to be secured to the vehicle, each said support member having a bottom portion adapted to be disposed in generally facing relation towards said vehicle body surface and to rest generally flush against said vehicle body surface, an upper and outer side portion curving gradually upwardly and inwardly in diverging relation to said bottom portion, and an elongated main channel member opening along a plane which diverges from a plane extending generally perpendicularly from said bottom portion of said support member, wherein said channel member is offset from a longitudinal centerline of said support member;
at least one cross member having two end portions and disposed generally perpendicularly between said support members to extend elevationally above and generally parallel to said vehicle body surface;
locking means associated with said cross member at each of said two end portions for releasably locking said cross member in a selected position on each said support member, said locking means having a housing with a locking hook member extending therefrom; and
actuating means pivotally associated with said locking means at a first pivot point and with said locking means at a second pivot point for moving said locking hook member generally linearly inwardly and outwardly of said locking means in response to manual movement of said actuating member pivotally relative to said locking means releasably to secure said locking means and said cross member at a desired position along said support members.

According to the present invention there is provided an article carrier adapted to be secured to a motor vehicle adjacent to a generally horizontally extending vehicle body surface, the carrier comprising:
a pair of elongate support members adapted to be secured to said vehicle, each said support member having a bottom portion adapted to be disposed in generally facing relation toward said vehicle body surface and to rest generally flush against said vehicle body surface, an upper and outer side portion curving gradually upwardly and inwardly in diverging relation to said bottom portion, and an elongated main channel member opening along a plane which diverges from a plane extending generally perpendicularly from said bottom portion of said support member, wherein said channel member is offset from a longitudinal centerline of said support member;
at least one cross member having two end portions and disposed generally perpendicularly between said support members to extend elevationally above and generally parallel to said vehicle body surface;
locking means associated with said cross member at each of said two end portions for releasably locking said cross member in a selected position on each said support member, said locking means having a housing with a locking hook member extending therefrom;
said channel member having a generally vertically depending lip portion forming a secondary channel, said lip portion having a plurality of spaced apart openings sized so as to allow a portion of said locking hook member to protrude therethrough into said secondary channel, thereby positively to lock said locking means to said support member; and
actuating means pivotally associated with said locking means at a first pivot point and with said locking means at a second pivot point for moving said locking hook member generally linearly inwardly and outwardly of said locking means and in a direction generally perpendicular to said locking portion in response to manual movement of said actuating member pivotally relative to said locking means such that said locking hook member cooperates with said depending lip portion of said support member releasably to secure said locking means and said cross member at a desired position along said support members.

The openings, which may advantageously comprise notches and/or apertures formed in the lip portion, help to secure the locking mechanism more positively to the support member. The openings may take a variety of forms to suit the needs of specific applications and the specific structure of the locking mechanism used therewith.

Embodiments of apparatus in accordance with the present invention will now be described, by way of example only, with reference to the accompanying drawings. In these drawings Figures 1-13 illustrate prior art apparatus of the sort disclosed in US-A-4 684 048.

In the drawings:
Figure 1 is a fragmentary perspective view of an automobile showing a prior art article carrier mounted thereon which is capable of being modified to become in accordance with the present invention;
Figure 2 is an enlarged sectional view of the support member portion of the structure illustrated in Figure 1 taken along the line 2-2 thereof;
Figure 3 is an enlarged sectional view of the support member portion of the structure illustrated in Figure 1 taken along the line 3-3 thereof;
Figure 4 is an enlarged sectional view of one of the front stanchion portions of the structure of Figure 1 taken along the line 4-4 thereof;
Figure 5 is an elevated enlarged fragmentary view of one of the front stanchion assemblies of Figure 1 taken in the direction of arrow 5;
Figure 6 is a cross sectional view of the cross rail portion of Figure 5 taken along the line 6-6 of Figure 5;
Figure 7 is an elevated enlarged fragmentary view of one of the rear stanchion portions of the structure of Figure 1 taken in the direction of arrow 7;
Figure 8 is a cross sectional view of the cross rail portion of Figure 7 taken along the line 8-8 of Figure 7;
Figure 9 is a cross sectional view of the rear stanchion of Figure 7 locked to the base support member or slat of Figure 1;
Figure 10 is a cross sectional view similar to Figure 9 of the rear stanchion of Figure 7 released from the base support member or slat of Figure 1;
Figure 11 is a view similar to Figure 4 of the rear stanchion of Figure 9 looking in the direction of arrow A in Figure 9 having portions broken away;
Figure 12 is a view similar to Figure 11 of the rear stanchion of Figure 10 looking in the direction of arrow B in Figure 10 having portions broken away;
Figure 13 is a vertical sectional view of either Figure 6 or Figure 8 along the line 13-13 of either view of the tie down disposed in the cross rail of either view;
Figure 14 is a fragmentary perspective view of a slat in accordance with a preferred embodiment of the present invention showing the channel member of the slat having a plurality of apertures with which the hook of the present invention may engage;
Figure 15 is an alternative preferred embodiment of the apparatus of Figure 14 showing the channel member including a plurality of notches on an inner wall thereof;
Figure 16 is another alternative preferred embodiment of the present invention of Figure 14 showing the channel member comprising a plurality of semi-circular notches formed in an inner wall thereof;
Figure 17 is yet another alternative preferred embodiment of the apparatus of Figure 14 showing a plurality of apertures in an inner wall of the channel member of the slat, where the apertures each have a "half moon" shape;
Figure 18 is still another alternative preferred embodiment of the slat assembly of Figure 14 showing the channel member thereof including a plurality of square shaped notches formed in an inner wall of the channel member; and
Figure 19 is another alternative preferred embodiment of the apparatus of Figure 14 showing a plurality of notches formed in a channel member thereof, where each of the notches have angled sides.

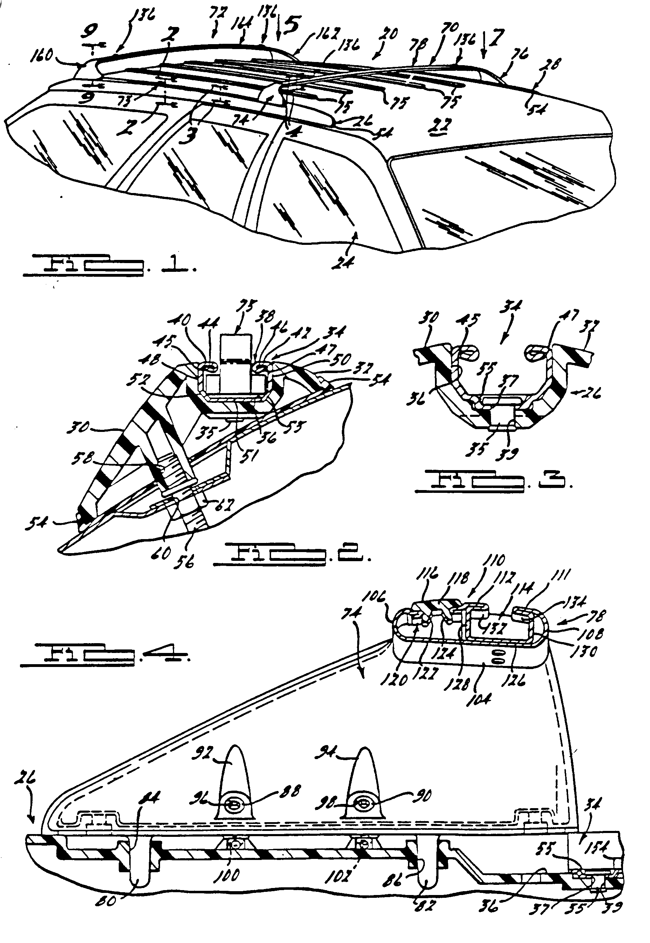

### DESCRIPTION OF PRIOR ART APPARATUS (FIGURES 1 - 13)

Referring now in detail to Figure 1 of the drawings, a vehicle luggage carrier 20 is shown in operative association with a generally horizontally disposed roof 22 of a typical automotive vehicle 24. Generally speaking, the luggage carrier 20 comprises a pair of laterally spaced, longitudinally extending support members or slats 26 and 28 which are secured upon the roof 22 at positions adjacent the lateral sides or edges thereof. In the embodiment illustrated, the members 26 an 28 are disposed over the seam where the roof 22 meets the remainder of the body portion of the vehicle, where the roof 22 has a downward curvature, which places the members 26 and 28 adjacent the horizontally extending surface portion of the roof 22. The members 26 and 28 have an external surface configuration that flows aerodynamically and smoothly in the surface of the vehicle 24.

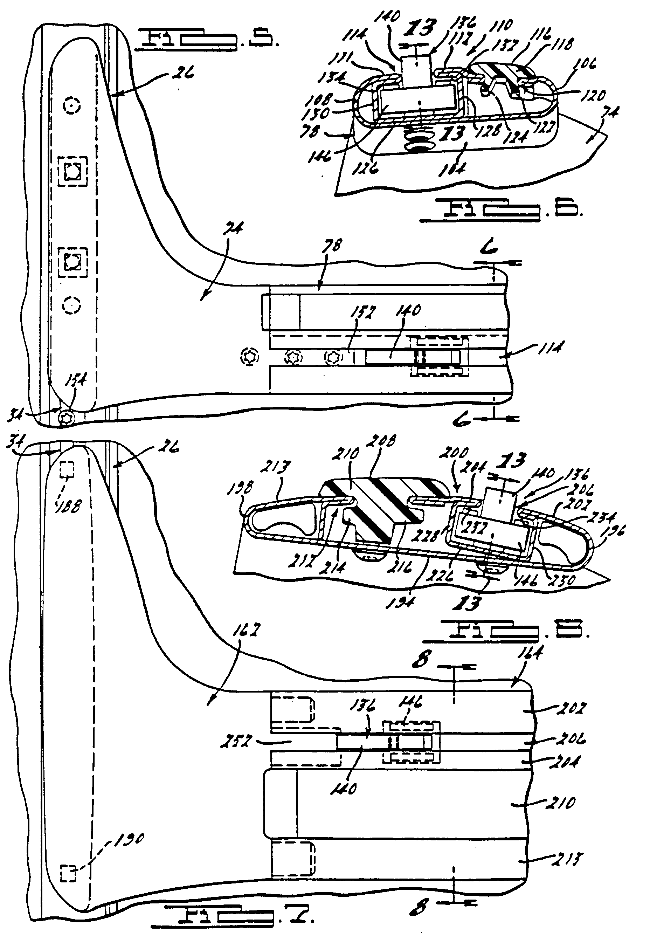

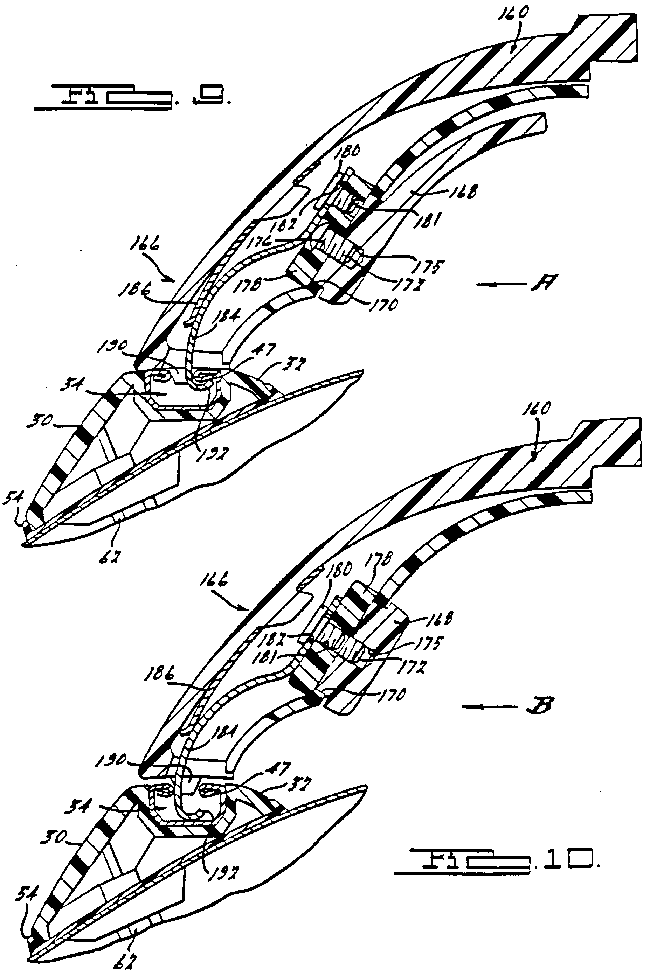

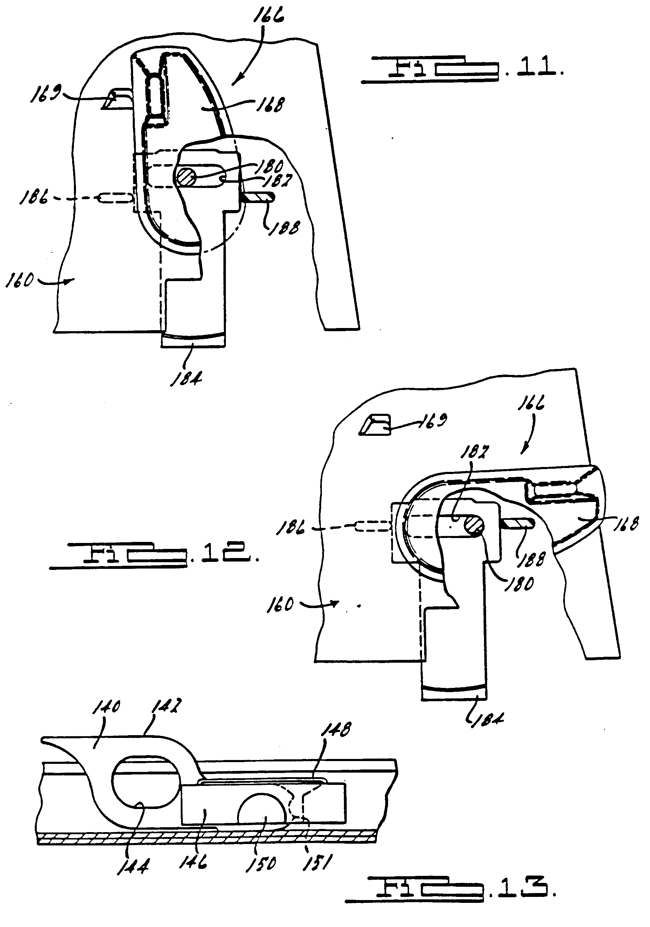

Intermediate portions of the member 26 (or 28) are illustrated in cross section in Figures 2 and 3. The member 26 comprises first 30 and second 32 exterior surfaces having an elongated channel 34 between the surfaces. The channel 34 comprises an elongated recess 36 and a liner 38 disposed in said recess 36 by means of, with reference to Figure 3, fasteners 35 set through bores 37 in the liner and bores 39 in the recess 36. The liner 38 has upper article supporting surfaces 40, 42 disposed on a pair of inwardly directed upper flanges 44, 46, a pair of sidewalls 48, 50 extending downwardly therefrom, and a base 51 extending between the walls 48, 50 and integrated with the walls 48 and 50 via walls 52 and 53, respectively. The upper flanges 44, 46 are rolled back as illustrated in Figures 2 and 3 to provide grooves 45 and 47 in the interior of the channel 34 for the purposes as will be described below. The fasteners 35 are set below the surface of the base 51 by placement in recesses 55, as shown in Figures 3 and 4.

Referring to Figure 2, a pad 54 is disposed between each of the members 26 and 28 and the roof 22. Each member 26 or 28 is secured to the roof 22 by a plurality of shreaded collar studs 56 threadably engaged to the member 26 or 28 within a bore 58 and engaged with the roof 22 at the interior of the roof 22 through a plurality of holes 60 in the roof by means of a plurality of nuts 62. The studs 56 engage the members 26 and 28 at the plurality of bores 58 by augering into the members 26 and 28, which are plastic in the preferred embodiment, or by other conventional means. In this manner, the studs 56 are all hidden from view when the members 26 and 28 are assembled on the vehicle.

The article carrier 20 of Figure 1 further comprises a pair of transversely or laterally extending cross member assemblies 70 and 72 and may also include a tie down 73 and a plurality of intermediate supporting slats 75. The front cross member assembly 70 comprises a pair of stanchions 74 and 76 telescopically engaged with and secured to a front cross rail 78. Referring to Figure 4, the stanchion 74 (and likewise 76) is fixedly secured to the support member 26 (and 28) via two posts 80 and 82 which fit into two bores 84 and 86 at the front portion of each of the members 26 and 28 and via two bolts 88 and 90 fitting through recesses 92 and 94 and apertures 96 and 98 in each of the stanchions 74 and 76 into corresponding threaded bores 100 and 102 in the members 26 and 28.

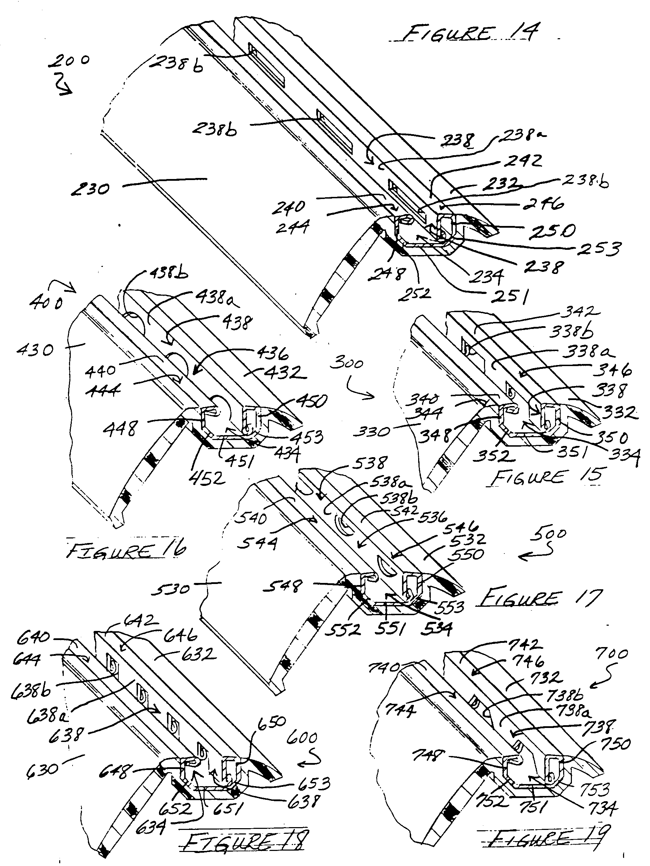

The stanchions 74 and 76 have an aerodynamically streamlined curvature as illustrated in Figures 1, 4 and 5 and telescopically engage the front cross rail 78 in a similarly aerodynamically streamlined manner. Referring to Figures 4 and 6, the cross rail 78 comprises a bottom surface 104 from which a curved leading surface 106 and a curved trailing surface 108 extend upwardly. The upper surface 110 of the cross rail 78 comprises a series of elongated article supporting surfaces including surfaces 111 and 112 disposed one on each side of an elongated first channel 114 and a surface 116 disposed on an elongated front bumper 118 set into a second channel 120 in the rail 78. The bumper 118 has a pair of elongated flanges 122 and 124 on the underside thereof to secure the bumper in the second channel 120.

Referring to Figures 4 and 6, the first channel 114 has an interior cross section having a base 126, a pair of sidewalls 128 and 130, and a pair of interior clamping surfaces 132 and 134. Within the first channel 114 (Figure 6) is disposed a tie down/positioning member 136 similar to that disclosed in US-A-4,460,116. The tie down/positioning member 136 (Figures 6 and 13) is comprised of an upper section 140 having a vertically disposable abutment surface 142 and an aperture 144 therein, a base portion 146 including spring biasing member 148, and a pivot 150 for pivotably associating the upper section 140 with the base portion 146. The upper section 140 also includes a lower cam member 151 on the opposite side of the pivot 150 which engages the base 126 of the first channel 114 with pivotal movement of the upper section 140 from the horizontal to the vertical and clamps the biasing members 148 against the clamping surfaces 132 and 134 and locks the tie down/positioning member 136 in any selected position along the length of the first channel 114. The ends of the channel 114 also include an abutment 152 (Figure 5) to aid in disposing the upper section 140 from the horizontal to the vertical.

The rear cross member assembly 72 is adjustable to any selected position along the length of the members 26 and 28, as determined by a stop 154 (Figures 4 and 5) or by the end of the channel 34, and may also be removed, if desired. The assembly 72 (Figures 1 and 7) comprises a pair of stanchions 160 and 162 telescopically engaged with and secured to a rear cross rail 164. The stanchions 160 and 162 each engage a corresponding support member 26 or 28 at the channel 34 thereof via a locking mechanism 166 (Figures 9 through 12). The locking mechanism 166 comprises a pivoted lever 168 mounted to each stanchion 160 or 162 within a recess 170 and secured to a pin 172. The lever 168 is limited in movement by a stop 169 (Figure 11) to indicate a vertically disposed position for the lever 168. The pin 172 threadably engages the lever 168 in a bore 175 and communicates with the interior 174 of the stanchion and engages an eccentric member 178 disposed in the stanchion interior 174 via a bore 176 at a position offset from the center of the member 178 to eccentrically move a pin 180 mounted on the member 178 at bore 181. Referring to Figures 11 and 12, the pin 180 moves within a yoke 182 which is integrated with hook 184. Guides 186 and 188 may be disposed one on each side of the yoke 182 to stabilize the linear vertical movement of the hook 184. The look 184 is formed with a curvature to permit some resiliency. Further tension is applied to the hook 184 by a tensioning member 186 fixedly disposed adjacent the path of movement of the hook 184 as illustrated in Figures 9 and 10.

In operation, the stanchion 160 or 162 is placed over the channel 34 of the support member or slat 26 and the hook 184 is placed within the channel 34. The stanchion 160 or 162 also includes front and rear alignment posts 188 and 190 (Figure 7) which are also placed within the channel 34 as the stanchion is set upon the upper surfaces 40 and 42 of the member 26 or 28. Once alignment is attained, the lever 168 is rotated from a horizontally disposed position (Figure 10) to a vertically disposed position (Figure 9) abutting against the stop 169 and lifting the hook 184 so that its leading edge 192 is engaged with the groove 47 of the channel 34 to clamp the stanchion 160 or 162 to the support member or slat 26. The return of the lever 168 to a horizontal disposition releases the hook 184 and the stanchion 160 or 162 from the member or slat 26 for adjustment or removal.

Referring to Figures 7 and 8, the rear cross rail 164 is similar to the front cross rail 78 in that it has a bottom surface 194 from which a curved leading surface 196 and a curved trailing surface 198 extend upwardly. It should be noted that the leading surface 196 and trailing surface 198 may be reversed, however, depending upon the selected placement of the rear cross rail assembly 72 on the members 26 and 28. The upper surface 200 of the cross rail 164 comprises a series of elongated article supporting surfaces including surfaces 202 and 204 disposed one on each side of an elongated first channel 206, a surface 208 disposed on an elongated front bumper 210 set into a second channel 212 in the rail 78 and an additional surface 213. The bumper 210 has a pair of elongated flanges 214 and 216 on the underside thereof to secure the bumper in the second channel 212.

Referring to Figure 8, the second channel 212 has an interior cross section having a base 226, a pair of sidewalls 228 and 230, and a pair of clamping surfaces 232 and 234. Within the second channel 212 is disposed a tie down/positioning member 136 again similar to that disclosed in Applicant's United States Patent No. 4,460,116, issued Jul. 17, 1984. The tie down/positioning member 136 is again comprised on an upper section 140 having a vertically disposable abutment surface 142 and an aperture 144 therein, a base portion 146 including spring biasing members 148, and a pivot 150 for pivotably associating the upper section 140 with the base portion 146. The upper section 140 also includes a lower cam member on the opposite side of the pivot 150 which engages the base 226 of the first channel 212 with pivotal movement of the upper section 140 from the horizontal to the vertical and which clamps the biasing members 148 against the clamping surfaces 232 and 234 and locks the tie down/positioning member 136 in any selected position along the length of the first channel 212. The ends of the channel 212 also include an abutment 252 (Figure 7) to aid in disposing the upper section 140 from the horizontal to the vertical.

### DESCRIPTION OF PREFERRED EMBODIMENTS (FIGURES 14 - 19)

Referring now to Figures 14-19 a plurality of preferred embodiments of the slat assembly of the present invention are shown. Each one of the embodiments of Figures 14-19 provide a significant added benefit in that they serve to securely engage the hook 184 (Figures 9 and 10), to even more securely hold the locking mechanism 166 (Figures 9 and 10) thereto.

Referring specifically to Figure 14, a slat assembly 200 is shown in accordance with a first preferred embodiment of the present invention. The slat assembly 200 is generally similar to the slat assemblies 26 and 28 (Figures 1 and 2), and is secured to the roof 22 of the vehicle 24 shown in Figure 1. Accordingly, components of the slat assembly 200 identical to slats 26 and 28 will be denoted by reference numerals increased by 200.

With continuing reference to Figure 14, the slat assembly 200 includes first and second exterior surfaces 230 and 232, respectively, having an elongated channel 234 formed between the surfaces 230 and 232. The channel member 238 resides within the channel 234 and includes a pair of upper article supporting surfaces 240 and 242 formed by a pair of inwardly directed upper flanges 244 and 246. The channel member 238 further includes a pair of side walls 248 and 250 extending downwardly from the upper flanges 244 and 246, wall portions 252 and 253 and a base 251 formed integrally with the wall portions 252 and 253.

The primary difference between the channel member 238 of the slat assembly 200 of Figure 14, versus the channel member 38 of Figure 1, is the addition of a lip portion 238a which is integrally formed with the channel member 238, and which depends downwardly from the upper flange 246. The lip portion 238a includes a plurality of generally rectangularly shaped apertures 238b. The apertures 238b are each adapted to receive the leading edge 192 of the hook 184 to even more positively secure the locking mechanism 166 securely to the slat assembly 200.

With regard to Figure 15, a slat assembly 300 in accordance with another preferred embodiment of the present invention is shown. The slat assembly 300 is identical to the slat assembly 200 of Figure 14, and therefore components thereof have been denoted with reference numerals increased by 100 over those used in connection with Figure 14. The difference between the slat assembly 300 is the inclusion of generally rectangularly shaped notches 338b in the lip portion 338a of the channel member 338. The construction of the slat assembly 300 is otherwise identical to the slat assembly 200 of Figure 14. The generally rectangularly shaped notched portions 338b allow the leading edge 192 of the hook 184 to be more positively coupled to the slat assembly 300 with slightly less precision in the positioning of the hook 184 elevationally relative to the base 351 of the channel member 338.

Referring to Figure 16, yet another slat assembly 400 in accordance with another alternative preferred embodiment of the present invention is shown. The components of slat assembly 400 common to slat assembly 200 have been denoted by reference numerals increased by 200 in Figure 16. The principal difference between the slat assembly 400 from the slat assembly 200 of Figure 14 is the inclusion of "half moon" shaped notches 438b in the lip portion 438a of the channel member 438. The half moon shaped notches 438b further allow the leading edge 192 of the hook 184 to be easily engaged therein to even more positively hold the locking mechanism 166 to the slat assembly 400.

Referring now to Figure 17, yet another slat assembly 500 is shown in accordance with yet another alternative preferred embodiment of the present invention. Components of the slat assembly common to the slat assembly 200 are denoted in Figure 17 by reference numerals increased by 300 over those used in Figure 14.

The slat assembly 500 is virtually identical to the slat assembly 200 with the exception of a plurality of half moon shaped apertures 538b formed in the lip portion 538a of the channel member 538. The half moon shaped apertures 538b allow precise engagement of the leading edge of the hook 186 to secure the locking mechanism 166 very securely to the slat assembly 500.

Referring to Figure 18, another slat assembly 600 is shown in accordance with yet another alternative preferred embodiment of the present invention. The slat assembly 600 is substantially identical to the slat assembly 200 and components of slat assembly 600 common to slat assembly 200 have been denoted by reference numerals increased by 400 over those used in Figure 14. The principal difference is the inclusion of a plurality of generally square shaped notches 638b in the lip portion 638a of the channel member 638. The generally square shaped notches 638b also serve to securely hold the leading edge 192 of the hook 184, and thus the locking mechanism 166, securely to the slat assembly.

With reference to Figure 19, a slat assembly 700 is shown in accordance with yet another alternative embodiment of the present invention. The slat assembly 700 is substantially identical to the slat assembly 200 and common components have been denoted by reference numerals in Figure 19 which are 500 over those used in Figure 14. The principal difference of the slat assembly 700 is the inclusion of a plurality of polygonal shaped notches 738b in the lip portion 738a of the channel member 738. The polygonal shaped notches 738b further serve to permit extremely secure engagement of the leading edge 192 of the hook 184 to the channel member 738, while allowing somewhat easier engagement of the leading edge 192 therein due to the angled walls of the polygonal shaped notches 738b.

Each of the slat assemblies 200-700 of Figures 14-19 provide unique advantages in even further securing a hook member or like device of a locking mechanism thereto, while still permitting longitudinal adjustment of the locking mechanism, and thus a cross bar attached thereto, at a plurality or positions along the length of the slat. It will be appreciated, however, that still further variations of the notches and apertures shown in Figures 14-19 could be used to secure a hook member, and that the embodiments of Figures 14-19 are meant to illustrate some of the many possible shapes of notches and apertures that can be implemented to accomplish the objectives of the present invention.

## Claims

1. An article carrier (20) adapted to be secured to a motor vehicle (24) adjacent to a generally horizontally extending vehicle body surface (22), the carrier comprising:
a pair of elongate support members (200, 300, 400, 500, 600, 700) adapted to be secured to said vehicle, each said support member having a bottom portion adapted to be disposed in generally facing relation toward said vehicle body surface and to rest generally flush against said vehicle body surface, an upper and outer side portion (230, 330, 430, 530, 630) curving gradually upwardly and inwardly in diverging relation to said bottom portion, and an elongated main channel member (238, 338, 438, 538, 638, 738) opening along a plane which diverges from a plane extending generally perpendicularly from said bottom portion of said support member, wherein said channel member is offset from a longitudinal centerline of said support member;
at least one cross member (70) having two end portions and disposed generally perpendicularly between said support members (200, 300, 400, 500, 600, 700) to extend elevationally above and generally parallel to said vehicle body surface;
locking means (74,76) associated with said cross member (70) at each of said two end portions for releasably locking said cross member in a selected position on each said support member (200, 300, 400, 500, 600, 700), said locking means having a housing with a locking hook member (184) extending therefrom;
said channel member (238, 338, 438, 538, 638, 738) having a generally vertically depending lip portion (238a, 338a, 438a, 538a, 638a, 738a) forming a secondary channel, said lip portion having a plurality of spaced apart openings (238b, 338b, 438b, 538b, 638b, 738b) sized so as to allow a portion (192) of said locking hook member (184) to protrude therethrough into said secondary channel, thereby positively to lock said locking means to said support member; and
actuating means (168) pivotally associated with said locking means (74, 76) at a first pivot point and with said locking means at a second pivot point for moving said locking hook member (184) generally linearly inwardly and outwardly of said locking means and in a direction generally perpendicular to said locking portion (192) in response to manual movement of said actuating member pivotally relative to said locking means such that said locking hook member cooperates with said depending lip portion (238a, 338a, 438a, 538a, 638a, 738a) of said support member releasably to secure said locking means and said cross member at a desired position along said support members.

2. The article carrier of claim 1, wherein said channel member (238, 338, 438, 538, 638, 738) includes a bottom wall portion (251, 351, 451, 551, 651, 751) said lip portion (238a, 338a, 438a, 538a, 638a, 738a) being disposed generally perpendicular to said bottom wall portion.

3. The article carrier of claim 1 or claim 2, wherein said openings comprise apertures (238b, 538b) formed in said lip portion (238a, 538a).

4. The article carrier of claim 1 or claim 2, wherein said openings comprise notches (338b, 438b, 638b, 738b) formed in said lip portion (338a, 438a, 638a, 738a).

## Patentansprüche

1. Lastenträger (20), der an einem Kraftfahrzeug (24) anliegend an einer sich im allgemeinen horizontal erstreckenden Kraftfahrzeugkarosseriefläche (22) befestigt werden kann, wobei der Träger folgendes umfaßt:
ein Paar von länglichen Stützelementen (200, 300, 400, 500, 600, 700), die an dem Fahrzeug befestigt werden können, wobei jedes Stützelement einen Bodenabschnitt, der in einer im allgemeinen gegenüberliegenden Beziehung zu der Fahrzeugkarosseriefläche angeordnet werden kann und im allgemeinen bündig an der Fahrzeugkarosseriefläche aufliegt, einen oberen und einen unteren Seitenabschnitt (230, 330, 430, 530, 630, die sich in einer divergierenden Beziehung zu dem Bodenabschnitt allmählich nach oben und nach innen umbiegen, und ein längliches Hauptnutelement (238, 338, 438, 538, 638, 738) aufweist, das sich entlang einer Ebene öffnet, die von einer Ebene abweicht, die sich im allgemeinen senkrecht ausgehend von dem Bodenabschnitt des Stützelements erstreckt, wobei das Nutelement von einer Längsmittellinie des Stützelements versetzt ist,
mindestens einen Querträger (70) mit zwei Endabschnitten, der im allgemeinen senkrecht zwischen den Stützelementen (200, 300, 400, 500, 600, 700) angeordnet ist, um sich höhenmäßig oberhalb und im allgemeinen parallel zu der Fahrzeugkarosseriefläche zu erstrecken,
Verriegelungsmittel (74, 76), die mit dem Querträger (70) an jedem der beiden Endabschnitte verknüpft sind, damit der Querträger in einer ausgewählten Position auf jedem der Stützelemente (200, 300, 400, 500, 600, 700) lösbar festgesetzt werden kann, wobei das Verriegelungsmittel ein Gehäuse mit einem sich von dort aus erstreckenden Verriegelungshakenelement (184) besitzt, wobei das Nutelement (238, 338, 438, 538, 638, 738) einen im allgemeinen vertikal herabhängenden Randabschnitt (238a, 338a, 438a, 538a, 638a, 738a) besitzt, der eine sekundäre Nut bildet, wobei der Randabschnitt eine Vielzahl von beabstandeten Öffnungen (238b, 338b, 438b, 538b, 638b, 738b) aufweist, die so bemessen sind, daß ein Abschnitt (192) des Verriegelungshakenelements (184) dort hindurch in die sekundäre Nut eindringen kann, um dadurch das Verriegelungsmittel formschlüssig an dem Stützelement festzusetzen, und
Betätigungsmittel (168), die schwenkbar mit dem Verriegelungsmittel (74, 76) an einem ersten Drehpunkt und mit dem Verriegelungsmittel an einem zweiten Drehpunkt verbunden sind, um das Verriegelungshakenelement (184) im allgemeinen linear nach innen und nach außen ausgehend von dem Verriegelungsmittel und in einer Richtung im allgemeinen senkrecht zu dem Verriegelungsabschnitt (192) zu bewegen, und zwar in Reaktion auf die manuelle Bewegung des Betätigungselements, das relativ zu dem Verriegelungsmittel derart verschwenkt wird, daß das Verriegelungshakenelement mit dem herabhängenden Randabschnitt (238a, 338a, 438a, 538a, 638a, 738a) des Stützelements zusammenwirkt, um das Verriegelungsmittel und den Querträger in einer gewünschten Lage entlang der Stützelemente lösbar zu befestigen.

2. Lastenträger nach Anspruch 1, bei dem das Nutelement (238, 338, 438, 538, 638, 738) einen Bodenwandabschnitt (251, 351, 451, 551, 651, 751) umfaßt und der Randabschnitt (238a, 338a, 438a, 538a, 638a, 738a) im allgemeinen senkrecht zu dem Bodenwandabschnitt angeordnet ist.

3. Lastenträger nach Anspruch 1 oder Anspruch 2, bei dem die Öffnungen Schlitze (238b, 538b) umfassen, die in dem Randabschnitt (238a, 538a) ausgebildet sind.

4. Lastenträger nach Anspruch 1 oder Anspruch 2, bei dem die Öffnungen Kerben (338b, 438b, 638b, 738b) umfassen, die in dem Randabschnitt (338a, 438a, 638a, 738a) ausgebildet sind.

## Revendications

1. Porte-bagages (20) adapté pour être fixé sur un véhicule à moteur (24), adjacent à une surface de la carrosserie (22) du véhicule s'étendant généralement horizontalement, le porte-bagage comprenant :
une paire d'éléments de support allongés (200, 300, 400, 500, 600, 700) adaptés pour être fixés audit véhicule, chacun desdits éléments de support ayant une partie de base adaptée pour être disposée en relation généralement de face à face par rapport à ladite surface de la carrosserie du véhicule, et pour reposer généralement de niveau contre ladite surface de la carrosserie du véhicule, une partie latérale supérieure et extérieure (230, 330, 430, 530, 630) s'incurvant graduellement vers le haut et vers l'intérieur en relation divergente par rapport à ladite partie de base, et un élément de canal allongé principal (238, 338, 438, 538, 638, 738) s'ouvrant le long d'un plan qui diverge par rapport à un plan s'étendant généralement perpendiculairement par rapport à ladite partie de base dudit élément de support, ledit élément de canal étant décalé par rapport à une ligne centrale longitudinale dudit élément de support;
au moins un élément transversal (70) ayant deux parties d'extrémité et disposé de façon généralement perpendiculaire entre lesdits éléments de support (200, 300, 400, 500, 600, 700) pour s'étendre en élévation au-dessus de ladite surface de la carrosserie du véhicule et généralement parallèle à celle-ci;
des moyens de verrouillage (74, 76) associés avec ledit élément transversal (70) à chacune desdites deux parties d'extrémité pour verrouiller, de façon libérable, ledit élément transversal dans une position sélectionnée sur chacun desdits éléments de support (200, 300, 400, 500, 600, 700), lesdits moyens de verrouillage ayant un logement avec un élément formant crochet de verrouillage (184) s'étendant depuis ce logement;
ledit élément de canal (238, 338, 438, 538, 638, 738) ayant une partie formant lèvre dépendante généralement verticale (238a, 338a, 438a, 538a, 638a, 738a) formant un canal secondaire, ladite partie formant lèvre ayant une pluralité d'ouvertures espacées l'une de l'autre (238b, 338b, 438b, 538b, 638b, 738b) dimensionnées de façon à permettre à une partie (192) dudit élément formant crochet de verrouillage (184) d'être en saillie à travers ces ouvertures à l'intérieur dudit canal secondaire, de façon à verrouiller de façon sûre lesdits moyens de verrouillage audit élément de support; et
des moyens d'actionnement (168) associés de façon pivotante avec ledits moyens de verrouillage (74, 76) en un premier point de pivotement, et avec lesdits moyens de verrouillage en un second point de pivotement pour déplacer ledit élément formant crochet de verrouillage (184), généralement de façon linéaire vers l'intérieur et vers l'extérieur desdits moyens de verrouillage, et dans une direction généralement perpendiculaire par rapport à ladite partie de verrouillage (192) en réponse au mouvement manuel dudit élément d'actionnement pouvant pivoter par rapport auxdits moyens de verrouillage, de telle sorte que ledit élément formant crochet de verrouillage coopère avec ladite partie formant lèvre dépendante (238a, 338a, 438a, 538a, 638a, 738a) dudit élément de support de façon à fixer, de manière libérable, lesdits moyens de verrouillage et ledit élément transversal en une position désirée le long desdits éléments de support.

2. Porte-bagages selon la revendication 1, dans lequel ledit élément de canal (238, 338, 438, 538, 638, 738) comporte une partie de paroi de base (251, 351, 451, 551, 651, 751) ladite partie formant lèvre (238a, 338a, 438a, 538a, 638a, 738a) étant disposée généralement perpendiculaire à ladite partie de paroi de base.

3. Porte-bagages selon la revendication 1 ou la revendication 2, dans lequel lesdites ouvertures comprennent des ajours (238b, 538b) formés dans ladite partie formant lèvre (238a, 538a).

4. Porte-bagages selon la revendication 1 ou la revendication 2, dans lequel lesdites ouvertures comprennent des encoches (338b, 438b, 638b, 738b) formées dans ladite partie formant lèvre (338a, 438a, 638a, 738a).
